# FASCICULE DE BREVET EUROPEEN

(11) **EP 3 894 278 B1**
(45) Date de publication et mention de la délivrance du brevet: **05.02.2025**
(21) Numéro de dépôt: 19817268.6
(22) Date de dépôt: 06.12.2019
(51) Int. Cl.: B60R 16/03, B60L 53/00, H02H 9/02, H02J 7/00, H02J 7/34, H02H 9/00

(54) **DISPOSITIF DE PRE-CHARGE D'UN RESEAU ELECTRIQUE DE PUISSANCE**
VORRICHTUNG ZUM VORLADEN EINES STROMNETZES
DEVICE FOR PRE-CHARGING AN ELECTRIC POWER NETWORK

(30) Priorité: 14.12.2018 FR 1872942
(43) Date de publication de la demande: 20.10.2021
(73) Titulaire: Ampere SAS, 92100 Boulogne-Billancourt (FR)
(72) Inventeur: AIT EL BACHA, Abdeslam, 94700 MAISONS-ALFORT (FR); PAMPHILE, Jordan, 78084 Guyancourt (FR); MAUDUIT, Jean-Roch, 78390 Bois d'Arcy (FR)
(74) Mandataire: Renault Group
(86) Numéro de dépôt international: PCT/EP2019/084032
(87) Numéro de publication internationale: WO 2020/120326

(56) Documents cités:
- EP-A2- 2 415 628
- DE-A1- 102016 005 565
- FR-A1- 2 771 863
- FR-B1- 2 771 863
- JP-A- 2005 269 742
- US-A1- 2007 091 528
- US-B2- 9 806 520

## Description

### DOMAINE TECHNIQUE AUQUEL SE RAPPORTE L'INVENTION

La présente invention concerne de manière générale l'architecture d'un réseau électrique de puissance d'un véhicule automobile à propulsion électrique.

Elle concerne plus particulièrement un dispositif de pré-charge d'un réseau électrique, et notamment un dispositif de pré-charge d'un réseau électrique de puissance d'un tel véhicule automobile.

### ARRIERE-PLAN TECHNOLOGIQUE

Un réseau électrique de puissance embarqué à bord d'un véhicule à propulsion électrique comprend généralement une batterie d'accumulateurs munie d'un fusible de protection et un ensemble d'appareils consommateurs de courant qu'on appellera ci-après « charge électrique » et qui comprend notamment un moteur électrique et un onduleur.

Cette charge électrique dispose en pratique de condensateurs dont la capacité est très importante. Il s'avère donc nécessaire de pré-charger le réseau électrique de puissance avant d'y connecter la batterie d'accumulateurs et ceci afin d'éviter d'endommager les organes de commutation tel que des relais ou contacteurs.

On utilise pour cela un circuit de pré-charge qui permet de charger les condensateurs du réseau de puissance avant de fermer le circuit électrique à l'aide des organes de commutations (relais contacteurs de précharge etc...).

Le relais de pré-charge est piloté pour se fermer lors de la mise sous tension du véhicule électrique et pour s'ouvrir une fois que la pré-charge est achevée. Ce relais de pré-charge est connecté en série d'un élément limitant ainsi le courant dans le circuit de puissance à une valeur acceptable, ceci afin d'éviter d'endommager le réseau électrique de puissance.

Le document FR2771863 décrit un tel ensemble. Dans ce document, le dispositif de pré-charge est composé d'une thermistance dont la résistance limite le courant d'appel dans la charge électrique lors de la séquence de pré-charge. En cas de court-circuit sur le réseau de puissance, cette thermistance voit sa résistance interne augmenter sensiblement, ce qui et limite ainsi automatiquement le courant de défaut.

L'inconvénient majeur de la solution décrite ci-dessus est que la valeur de la résistance interne de la thermistance est très dépendante de la température ambiante, ceci est une contrainte importante dans un environnement sujet aux fortes variations de température ambiantes.

Cette solution nécessite en outre l'utilisation de thermistance différentes en fonction des caractéristiques du réseau électrique de puissance de chaque type de véhicule, et crée de la diversité de composants.

### OBJET DE L'INVENTION

Afin de remédier aux inconvénients précités de l'état de la technique, la présente invention propose un dispositif de pré-charge du réseau électrique de puissance d'un véhicule automobile à propulsion électrique, comprenant :
- une ligne électrique d'alimentation du réseau électrique de puissance, qui inclut un transistor principal,
- un module de commande du transistor principal, qui est adapté à limiter l'intensité du courant circulant dans la ligne électrique d'alimentation, et
- un module d'alimentation dudit module de commande, qui est connecté à la ligne électrique d'alimentation, de part et d'autre du transistor principal (de façon à fournir l'énergie nécessaire au fonctionnement de l'ensemble).

Ainsi, grâce à l'invention, le fonctionnement du dispositif de pré-charge est indépendant de la température ambiante.

Il peut en outre être réalisé avec des composants électriques très peu onéreux, compacts, fiables et peu sensibles aux perturbations électromagnétiques.

Son architecture permet en outre de le monter en lieu et place d'une résistance de pré-charge avec ses deux bornes de connexions. L'invention est prévu pour prélever l'énergie électrique nécessaire à son fonctionnement directement sur la ligne principale durant le court-instant précédant le lancement de la pré-charge.

D'autres caractéristiques avantageuses et non limitatives du dispositif de pré-charge conforme à l'invention sont les suivantes :
- il est prévu un boîtier et exactement deux bornes de connexion qui émergent dudit boîtier, les deux bornes de connexion étant connectées à la ligne électrique d'alimentation de part et d'autre du transistor principal ;
- le module d'alimentation comporte exclusivement des composants électriques passifs ;
- le module d'alimentation est adapté à retarder l'activation du module de commande par rapport au moment où une différence de potentiels apparaît aux bornes du transistor principal, de façon à emmagasiner suffisamment d'énergie pour assurer l'alimentation du module de commande pendant toute la durée de la pré-charge ;
- le module de commande comporte exactement un transistor qui est connecté au transistor principal ;
- le module d'alimentation et le module de commande sont conçus pour commander le transistor principal en mode linéaire au cours de la pré-charge du réseau électrique de puissance ;
- le module d'alimentation est adapté à générer une impulsion de courant ;
- le module de commande est adapté à limiter l'intensité du courant traversant le transistor principal en deçà d'un seuil prédéterminé ;
- le module de commande est adapté à réguler l'intensité du courant traversant le transistor principal à une valeur prédéterminée, pendant une durée prédéterminée ;
- le module de commande comporte un circuit intégré qui est adapté à commander le transistor principal en mode de modulation de largeur d'impulsion au cours de la pré-charge du réseau électrique de puissance ;
- la ligne électrique d'alimentation inclut une bobine ;
- le module de commande comporte un amplificateur opérationnel ;
- le module de commande est adapté à moduler l'intensité du courant au cours de la pré-charge du réseau électrique de puissance à une première valeur au cours d'un premier laps de temps, puis à une seconde valeur au moins trois fois supérieure à la première valeur au cours d'un second laps de temps ;
- le module de commande comporte un circuit de modulation de largeur d'impulsion.

L'invention porte aussi sur un réseau électrique, comportant :
- une batterie d'accumulateurs,
- un condensateur,
- deux lignes de connexion principales, qui connectent les bornes de la batterie d'accumulateurs aux bornes du condensateur et dont l'une au moins comporte un relais principal,
- un circuit de pré-charge qui est branché en parallèle de l'une des deux lignes de connexion principales et qui comprend un relais de pré-charge et un dispositif de pré-charge tel que précité.

### DESCRIPTION DETAILLEE DE QUELQUES EXEMPLES DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une vue schématique d'un réseau électrique de puissance conforme à l'invention ;
[Fig. 2] est une vue schématique du dispositif de pré-charge du réseau électrique de puissance de la figure 1 ;
[Fig. 3A] est un schéma électrique d'un premier mode de réalisation du dispositif de pré-charge de la figure 2 ;
[Fig. 3B] est un graphique illustrant la variation au cours du temps de la tension aux bornes du condensateur du réseau électrique de puissance de la figure 1 ;
[Fig. 3C] est un graphique illustrant la variation au cours du temps de l'intensité du courant alimentant le condensateur du réseau électrique de puissance de la figure 1 ;
[Fig. 4A] est un schéma électrique d'une variante du dispositif de pré-charge de la figure 3A ;
[Fig. 4B] est un graphique illustrant la variation au cours du temps de la tension aux bornes du condensateur du réseau électrique de puissance lorsque ce dernier comporte le dispositif de pré-charge de la figure 4A ;
[Fig. 4C] est un graphique illustrant la variation au cours du temps de l'intensité du courant alimentant le condensateur du réseau électrique de puissance lorsque ce dernier comporte le dispositif de pré-charge de la figure 4A ;
[Fig. 5A] est un schéma électrique d'une variante du dispositif de pré-charge de la figure 3A ;
[Fig. 5B] est un graphique illustrant la variation au cours du temps de la tension aux bornes du condensateur du réseau électrique de puissance lorsque ce dernier comporte le dispositif de pré-charge de la figure 5A ;
[Fig. 5C] est un graphique illustrant la variation au cours du temps de l'intensité du courant alimentant le condensateur du réseau électrique de puissance lorsque ce dernier comporte le dispositif de pré-charge de la figure 5A ;
[Fig. 6] est un schéma électrique d'un second mode de réalisation du dispositif de pré-charge de la figure 2.

En préliminaire, on notera que les éléments identiques ou similaires des différents modes et variantes de réalisation de l'invention représentés sur les différentes figures seront, dans la mesure du possible, référencés par les mêmes signes de référence et ne seront pas décrits à chaque fois.

On notera également que l'adjectif « connecté » (et ses dérivés) sera employé au sens électrique du terme, deux composants étant ainsi connectés ensemble lorsqu'un courant électrique est susceptible de circuler de l'un à l'autre de ces deux composants.

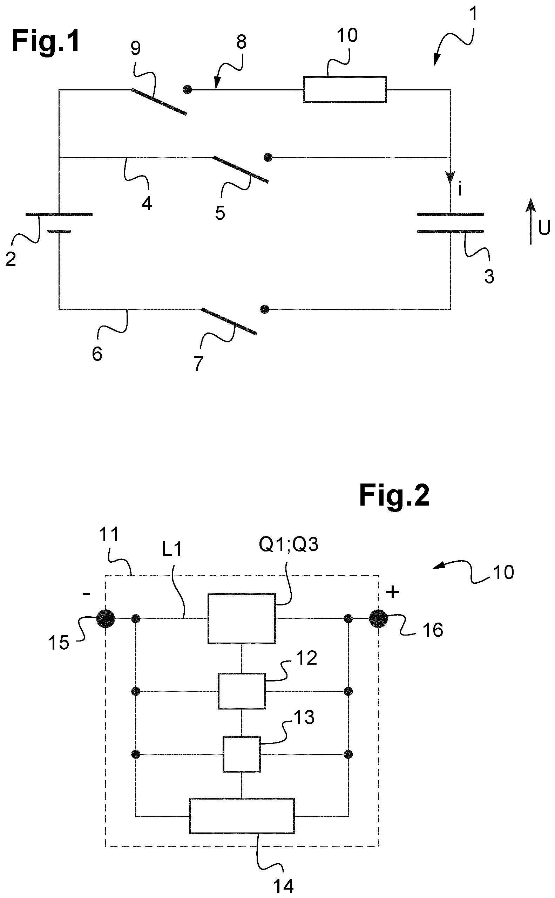

Sur la figure 1, on a représenté un réseau électrique de puissance 1 pour véhicule automobile à propulsion électrique.

Ce réseau électrique de puissance 1 comprend une batterie d'accumulateurs 2 spécifiquement conçue pour alimenter en courant le ou les moteurs électriques de traction du véhicule automobile.

Il comporte également un ensemble d'appareils électriques qui présente une capacité électrique élevée et qu'on appellera ci-après « condensateur 3 » (ou « charge électrique »). Parmi ces appareils, le dispositif comporte au moins un onduleur d'alimentation des moteurs électriques de traction.

Le réseau électrique de puissance 1 comprend par ailleurs deux lignes de connexion principales 4, 6 connectées chacune, d'un côté, à l'une des bornes de la batterie d'accumulateurs 2, et, de l'autre, à l'une des bornes du condensateur 3.

Chaque ligne de connexion principale 4, 6 est pourvue d'un relais 5, 7 capable d'isoler ou de mettre en contact électrique la batterie d'accumulateurs 2 et le condensateur 3.

Si, au démarrage du véhicule automobile, on connectait directement la batterie d'accumulateurs 2 avec le condensateur 3, de forts courants d'appel passeraient dans les lignes de connexion principales 4, 6 au risque d'endommager les relais 5, 7 ou le condensateur 3 lui-même.

Un circuit de pré-charge 8 est alors prévu pour permettre une montée progressive de la tension aux bornes du condensateur 3, la fermeture successive des deux relais 5, 7 n'intervenant qu'après cette montée.

Le circuit de pré-charge 8 est connecté en parallèle de l'une des lignes de connexion principales 4 (celle qui est connectée à borne positive de la batterie d'accumulateurs 2). Il est équipé d'un relais de pré-charge 9 qui peut être commandé à l'état ouvert ou à l'état fermé et d'un dispositif de pré-charge 10 qui fait plus précisément l'objet de la présente invention.

Le relais de pré-charge 9 ainsi que les relais 5, 7 sont commandés par un calculateur qui ne sera pas ici décrit en détail car ne faisant pas en propre l'objet de la présente invention.

Comme cela est représenté schématiquement sur la figure 2, le dispositif de pré-charge 10 comprend différents composants.

Il comprend tout d'abord un boîtier 11 en matériau isolant électriquement, qui loge l'ensemble des autres composants du dispositif de pré-charge 10.

Il comporte également un circuit imprimé qui est fixé dans le boîtier 11 et qui porte tous les composants électriques du dispositif de pré-charge 10.

Ce circuit imprimé comporte un substrat diélectrique sur lequel s'étendent des pistes conductrices électriquement, lesquelles pistes permettent de connecter entre eux les composants électriques du dispositif de pré-charge 10.

Dans la suite de cet exposé, on utilisera le terme « ligne » pour désigner une partie du circuit électrique qui est formée d'une ou de plusieurs pistes électriques et éventuellement aussi d'un ou de plusieurs composants électriques.

Comme le montre la figure 2, le dispositif de pré-charge 10 comporte tout d'abord une ligne principale L1 dont les extrémités sont connectées à deux bornes de connexion 15, 16 qui émergent du boîtier 11.

Ces deux bornes de connexion 15, 16 étant les seuls composants à émerger du boîtier 11, on comprend que ce dispositif de pré-charge 10 est conçu pour être connecté facilement et simplement au circuit de pré-charge 8, entre la batterie d'accumulateurs 2 et la condensateur 3.

La ligne principale L1 du dispositif de pré-charge 10 comporte un transistor principal (référencé Q1 ou Q3), qui est donc connecté entre les deux bornes de connexion 15, 16.

Il pourra s'agir d'un transistor bipolaire, auquel cas son collecteur sera connecté du côté de la borne de connexion 15 (côté batterie d'accumulateurs 2) et son émetteur sera connecté du côté de la borne de connexion 16 (côté condensateur 3).

En variante, il pourra s'agir d'un transistor à effet de champ, typiquement d'un transistor MOSFET, auquel cas son drain sera connecté du côté de la borne de connexion 15 (côté batterie d'accumulateurs 2) et sa source sera connectée du côté de la borne de connexion 16 (côté condensateur 3).

Le dispositif de pré-charge 10 comporte par ailleurs un module de commande 12 du transistor principal Q1 ; Q3. Ce module de commande 12 sera spécifiquement conçu de façon à limiter l'intensité i du courant alimentant le condensateur 3. Il permettra donc d'éviter que le courant appelé par le condensateur 3 arrive trop rapidement dans cette dernière. Il permettra en outre, en cas de court-circuit, de limiter les transferts de courant entre la batterie d'accumulateurs 2 et le condensateur 3.

Le dispositif de pré-charge 10 comporte aussi un module d'alimentation 14 de ce module de commande 12.

Ce module d'alimentation 14 est connecté aux bornes du transistor principal Q1 ; Q3, si bien qu'il peut prélever le courant dont il a besoin pour fonctionner directement sur la ligne principale L1.

Ce module d'alimentation 14 comporte exclusivement des composants électriques passifs, de façon à présenter un coût de revient réduit.

Enfin, comme cela est représenté schématiquement sur cette figure 2, il présente une fonction de temporisation 13, qui retarde l'activation du module de commande 12 afin de laisser au dispositif de pré-charge 10 suffisamment de temps pour stocker l'énergie qui lui sera nécessaire afin d'assurer la commande du transistor principal Q1 ; Q3 pendant l'ensemble de la pré-charge.

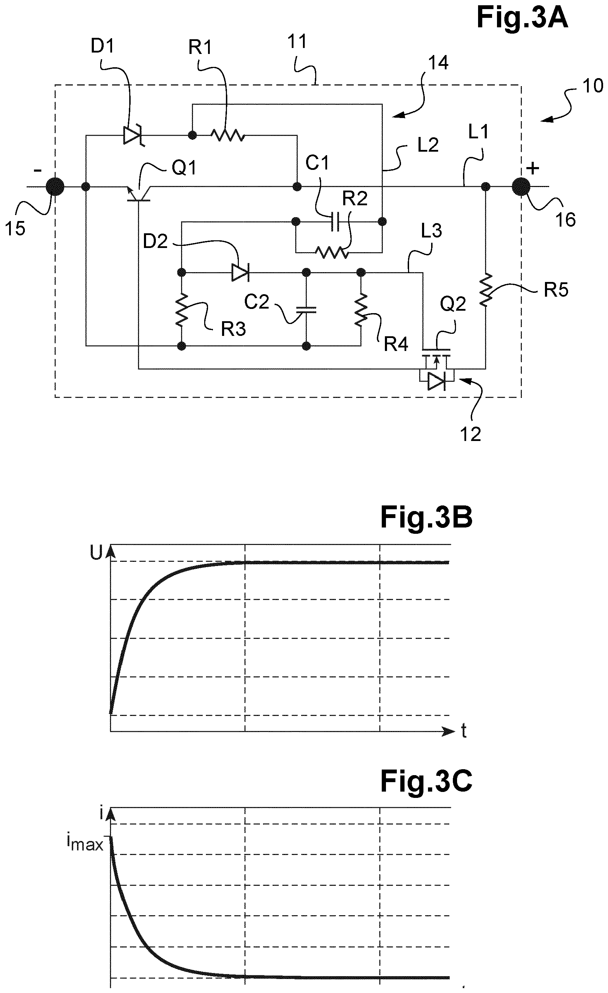

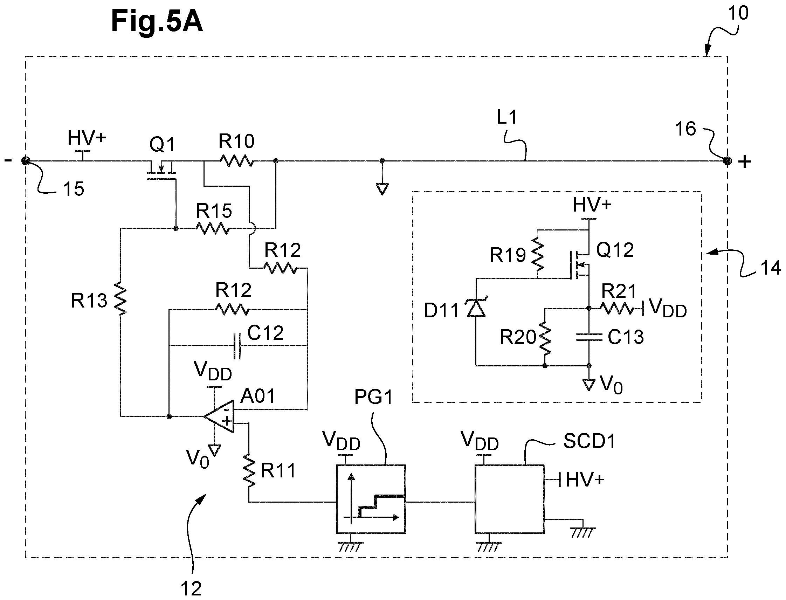

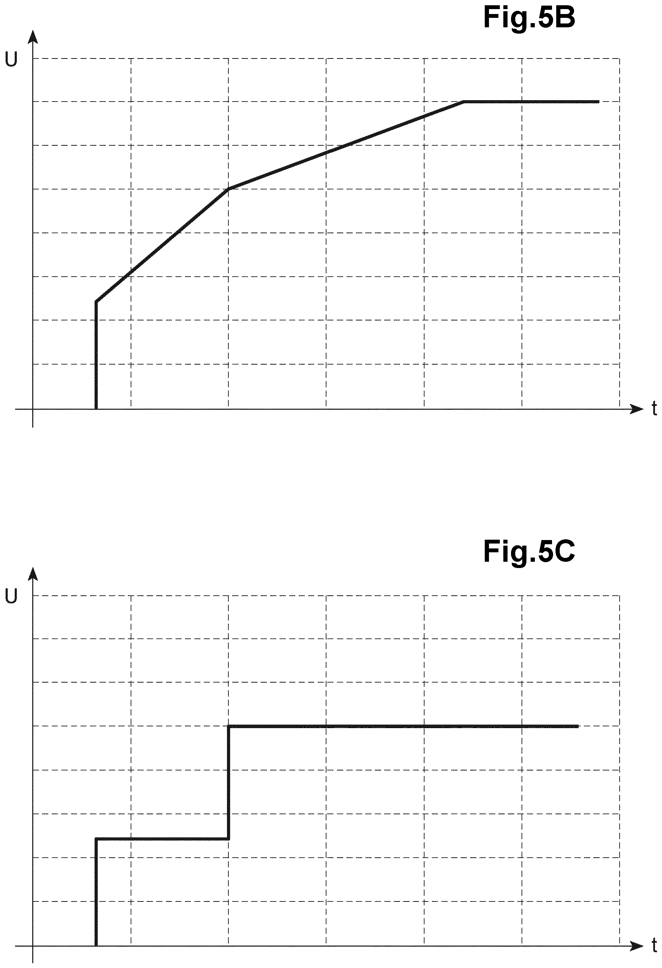

Sur les figures 3A et 5, on a représenté deux modes de réalisation de ce dispositif de pré-charge 10.

Dans le premier mode de réalisation représenté sur la figure 3A, le transistor principal Q1 est un transistor bipolaire.

Dans ce mode de réalisation, le module d'alimentation 14 est prévu pour générer, après la temporisation précitée, une impulsion de courant.

Comme le montre la figure 3A, le module d'alimentation 14 comporte pour cela une diode Zener D1 dont l'anode est connectée à la borne de connexion 15 et dont la cathode est connectée à une extrémité d'une première ligne électrique L2.

Il comporte également une première résistance R1 dont l'une des bornes est connectée à la borne de connexion 16 et dont l'autre borne est connectée à ladite extrémité de la première ligne électrique L2.

Il comporte aussi un circuit RC parallèle qui est connecté, d'un côté, à l'autre extrémité de la première ligne électrique L2, et, de l'autre, au module de commande 12. Ce circuit RC comporte ici une résistance R2 et un condensateur C1.

Le module d'alimentation 14 permet ainsi, lorsqu'une tension apparaît aux bornes du transistor principal Q1, d'assurer la fonction de temporisation précitée et de générer une impulsion calibrée.

Le module de commande 12 comporte une seconde ligne électrique L3 qui est connectée, d'un côté, au circuit RC parallèle, et, de l'autre, à un transistor de commande Q2.

Cette seconde ligne électrique L3 comprend une diode D2 dont l'anode est connectée du côté du circuit RC parallèle.

Le transistor de commande Q2 est le seul composant électrique actif du module de commande 12.

Il est piloté pour générer une impulsion électrique de durée prédéterminée. Cette durée est choisie égale à la durée nécessaire pour pré-charger le condensateur 3. Cette durée est donc fixée compte tenu du courant admissible par le transistor principal Q1, par le relais de pré-charge 9 et par le condensateur 3. Elle peut par exemple être de l'ordre de la demi-seconde.

Ce transistor de commande Q2 pourrait être du type bipolaire mais ici, on utilise plutôt un transistor MOSFET.

Le drain de ce transistor de commande Q2 est connecté au transistor principal Q1 tandis que sa source est connectée à la borne de connexion 16, via une résistance R5. Sa grille est quant à elle connectée à la seconde ligne électrique L3.

Afin que l'impulsion électrique générée présente les caractéristiques souhaitées pour piloter le transistor principal Q1 en mode linéaire pendant la durée prévue, on utilise une sorte de filtre qui comprend deux résistances R3, R4 et un condensateur C2.

Ces deux résistances R3, R4 et ce condensateur C2 sont chacun connectés, d'un côté, à la borne de connexion 15, et, de l'autre, à la seconde ligne électrique L3. La résistance R3 est connectée du côté de l'anode de la diode D2 tandis que les deux autres composants C2, R4 sont connectée du côté de la cathode de cette diode D2.

Grâce à l'architecture des modules d'alimentation 14 et de commande 12, le transistor principal Q1 est piloté en mode linéaire.

Les deux principaux critères à prendre en compte pour la conception de ces deux modules d'alimentation 14 et de commande 12 est la durée nécessaire à la pré-charge du condensateur 3 et le courant admissible par le transistor principal Q1 (notamment en cas de court-circuit).

Les valeurs de résistance et de capacité des composants électriques sont donc choisies de façon à remplir ces deux critères.

Dans le mode de réalisation représenté sur la figure 3A, les deux modules d'alimentation 14 et de commande 12 sont ainsi conçus pour limiter l'intensité i du courant traversant le transistor principal Q1 en deçà d'un seuil prédéterminé.

On a représenté sur la figure 3B la variation au cours du temps de la tension aux bornes du condensateur 3 et sur la figure 3C la variation au cours du temps de l'intensité i du courant alimentant le condensateur 3 pendant la pré-charge.

On observe que grâce à l'invention, la tension U monte progressivement aux bornes du condensateur 3 et que l'intensité i appelée par le condensateur 3 est initialement limitée en deçà du seuil iₘₐₓ et qu'elle diminue ensuite progressivement.

En pratique, lorsque l'usager souhaite démarrer son véhicule automobile, le calculateur est programmé pour laisser les relais 5, 7 à l'état ouvert et pour fermer le relais de pré-charge 9.

Immédiatement après la fermeture du relais de pré-charge 9, on observe que le transistor principal Q1 reste à l'état ouvert, le temps que les condensateurs C1, C2 se chargent, ce qui assure la fonction de temporisation précitée.

Une fois que le module d'alimentation 24 a stocké suffisamment d'énergie électrique, une impulsion électrique est reçue par le transistor de commande Q2, pendant une durée correspondant à la durée nécessaire pour réaliser la pré-charge du condensateur 3. Alors, pendant cette durée, le transistor principal Q1 se trouve piloté en mode linéaire, ce qui lui permet de limiter l'intensité du courant reçu par le condensateur 3.

Une fois la pré-charge achevée, les relais 5 puis 7 sont fermés. Enfin, le relais de pré-charge 9 est piloté à l'état ouvert.

On notera qu'en cas de défaut tel qu'un court-circuit dans le condensateur 3, le dispositif de pré-charge 10 permet de limiter le courant passant par le transistor principal Q1, ce qui évite tout dommage. Dans une telle éventualité, on peut prévoir que le calculateur soit programmé pour détecter ce défaut (en détectant par exemple que la tension aux bornes du condensateur 3 n'augmente pas) et pour ouvrir rapidement le relais de pré-charge 9.

Quoi qu'il en soit, à l'issue de ces opérations, le dispositif de pré-charge 10 est alors prêt à être réactivé (on parle de réarmement automatique) si les conditions nécessaires à son fonctionnement réapparaissent (si le relais de pré-charge 9 est à nouveau fermé et qu'une différence de potentiels apparaît aux bornes du transistor principal Q1).

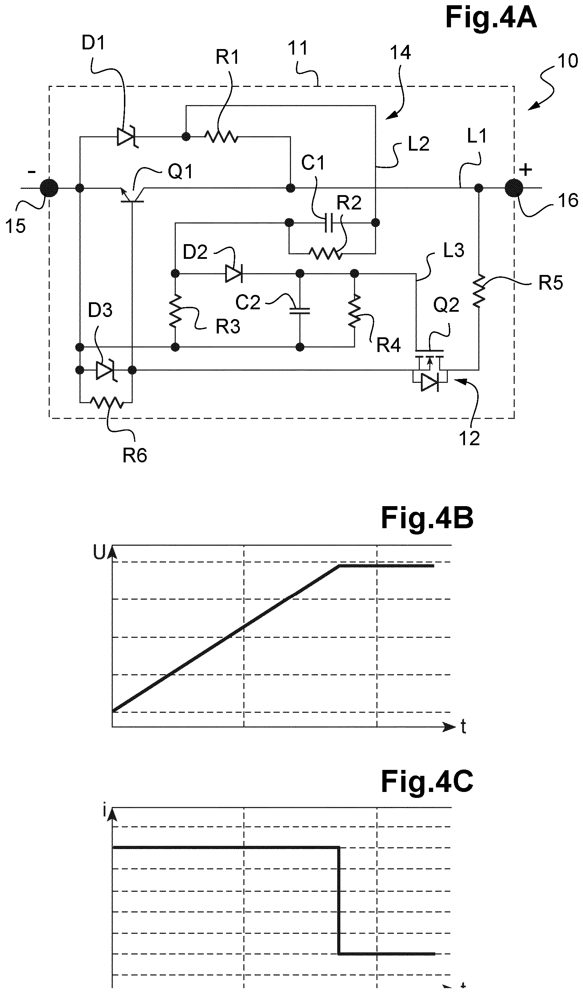

Sur la figure 4A, on a représenté une variante de réalisation du dispositif de pré-charge 10 de la figure 3A.

Dans cette variante, le module de commande 12 est prévu pour réguler l'intensité i du courant traversant le transistor principal Q1 à une valeur constante prédéterminée, pendant une durée prédéterminée. En d'autres termes, le dispositif de pré-charge 10 est prévu pour se comporter comme une source de courant constant, quelle que soit l'intensité du courant appelé par le condensateur 3. Il est ainsi prévu pour délivrer dans un laps de temps ni trop court (pour éviter les surcharges électriques) ni trop long (pour ne pas retarder inutilement le démarrage du véhicule automobile) la quantité d'énergie électrique nécessaire pour pré-charger le condensateur 3.

Dans cette variante, le dispositif de pré-charge 10 se distingue de celui représenté sur la figure 3A uniquement en ce qu'il comporte un montage en parallèle connecté, d'un côté, à la borne de connexion 15, et, de l'autre, à la ligne électrique connectant ensemble les deux transistors Q1, Q2.

Ce montage parallèle comporte une résistance R6 et une diode Zener D3 branchées en parallèle, l'anode de la diode Zener étant connectée du côté de la borne de connexion 15.

Ce montage parallèle permet, en profitant du mode linéaire dans lequel le transistor principal Q1 est piloté, d'écrêter l'intensité du courant i débité par la batterie d'accumulateurs 2 vers le condensateur 3 (voir figure 4C). On observe ainsi une montée linéaire de la tension aux bornes de le condensateur 3.

Dans cette variante, l'intensité du courant ne présente pas de pic mais est régulée, ce qui permet de réduire le temps nécessaire à la pré-charge.

Sur la figure 5A, on a représenté une autre variante de réalisation du dispositif de pré-charge 10 de la figure 3A, utilisant un amplificateur opérationnel AO1.

Dans cette variante, comme le montre la figure 5C, le module de commande 12 génère un profil de courant constant à deux paliers d'intensité i. Lors du premier palier, le dispositif permet la détection d'un éventuel court-circuit. Si aucun court-circuit n'est détecté, le dispositif est conçu pour poursuivre la pré-charge avec un deuxième palier d'intensité supérieure à celle du premier palier. Dans le cas contraire, la pré-charge est interrompue. Ce dispositif assure ainsi à ses composants électriques une bonne protection.

Sur la figure 5B, on a représenté l'évolution de la tension délivrée au condensateur. On observe sur cette figure que la tension augmente linéairement, avec deux pentes distinctes.

Sur la figure 5A, on observe que le module d'alimentation 14 comporte un circuit en étoile à trois bornes V₀ V_{DD}, HV+.

La borne V₀ est connectée à la broche d'alimentation négative de l'amplificateur opérationnel AO1 et à la borne de connexion 16 du dispositif de pré-charge 10.

La borne V_{DD} est connectée à la broche d'alimentation positive de l'amplificateur opérationnel AO1.

La borne HV+ est connectée à la borne de connexion 15 du dispositif de pré-charge 10.

Ce circuit en étoile présente un point de connexion central.

Il comporte, entre le point de connexion central et la borne V₀, un circuit RC parallèle comprenant un condensateur C13 et une résistance R20.

Il comporte, entre le point de connexion central et la borne V_{DD}, une résistance R21.

Il comporte enfin, entre le point de connexion central et la borne HV+, un transistor Q12 de type MOSFET, dont la grille est connectée à la borne V₀ via une diode Zener D11 et à la borne HV+ via une résistance R19.

Le module de commande 12 comporte pour sa part un circuit de détection de court-circuit SCD1 adapté à mesurer la tension à la borne HV+ et à en déduire la présence ou non d'un court-circuit.

Il comporte, à la sortie de ce circuit de détection de court-circuit SCD1, un circuit de génération de motif PG1 adapté à élaborer à sa sortie un signal de tension présentant plusieurs paliers (dans le cas où aucun court-circuit n'est détecté).

Le module de commande 12 comporte également l'amplificateur opérationnel AO1 précité.

Cet amplificateur opérationnel AO1 présente une entrée non inverseuse connectée à la sortie du circuit de génération de motif PG1 via une résistance R11.

Il comporte une sortie connectée à la grille du transistor principal Q1 via une résistance R13.

Il comporte une entrée inverseuse connectée à la ligne principale L1, entre la source du transistor principal Q1 et une résistance de shunt R10 prévue sur cette ligne principale L1, via une résistance R12.

Le module de commande 12 comporte également un circuit RC parallèle, comprenant une résistance R12 et un condensateur C12,branchés entre l'entrée inverseuse et la sortie de l'amplificateur opérationnel AO1.

Il comporte enfin une résistance R15 branchée entre le borne de connexion 16 et la grille du transistor principal Q1.

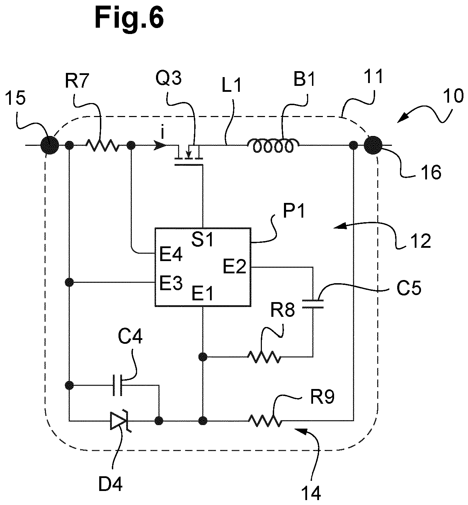

Sur la figure 6, on a représenté un second mode de réalisation de l'invention dans lequel le transistor principal Q3 est un transistor de type MOSFET.

Dans ce mode de réalisation, le module de commande 12 comporte un circuit intégré P1 qui est adapté à commander le transistor principal Q3 en mode de modulation de largeur d'impulsion PWM (c'est-à-dire non plus en mode linéaire, mais en mode de commutation ON/OFF).

Il s'agit ici d'un contrôleur en mode courant, du type UN3842.

Ce contrôleur comporte ici quatre entrées, dont :
- une entrée d'alimentation E1 qui est connectée au module d'alimentation 14,
- une entrée d'horloge E2 composée d'une résistance R8 et d'un condensateur C5 qui génèrent un signal de fréquence supérieure à 100kHz,
- une entrée de mise à la terre E3 qui est connectée à la borne de connexion 15, et
- une entrée de mesure E4 qui est connectée à la ligne principale L1, entre la borne de connexion 15 et le transistor principal Q3.

On observera ici qu'une résistance de shunt R7 (de très faible valeur) est prévue entre la borne de connexion 15 et le point de connexion de l'entrée de mesure E4 sur la ligne principale L1, ce qui permet au contrôleur de mesurer l'intensité i du courant traversant la ligne principale L1.

Dans ce mode de réalisation, le module d'alimentation 14 comporte un régulateur de tension composé d'une résistance R9 et de la diode zener D4 connecté, d'un côté, à la borne de connexion 16, et, de l'autre côté à la borne de connexion 15, ceci permet d'assurer une tension régulée sur l'entrée d'alimentation E1. Il comporte également un condensateur C4 qui permet d'assurer ici encore le maintien de l'alimentation électrique du module de commande 12 durant la pré-charge.

Le contrôleur comporte une unique sortie S1 qui est connectée à la grille du transistor principal Q3 pour le commander en mode de modulation de largeur d'impulsion PWM.

Dans ce mode de réalisation, le transistor principal Q3 ne fonctionne donc qu'en mode de commutation, si bien que le transistor choisi peut présenter une taille réduite.

On observe qu'il est ici prévu une bobine B1 sur la ligne principale L1, du côté de la borne de connexion 16 par rapport au transistor principal Q3, ce qui permet de lisser le courant reçu par le condensateur 3.

La présente invention n'est nullement limitée aux modes de réalisation décrits et représentés, mais l'homme du métier saura y apporter toute variante conforme à l'invention.

En particulier, on pourrait prévoir d'utiliser un circuit permettant de moduler l'intensité i du courant circulant dans la ligne principale L1 de façon à ce que cette intensité présente une première valeur au cours d'un premier laps de temps, puis à une seconde valeur au moins trois fois supérieure à la première valeur au cours d'un second laps de temps.

De cette façon, au cours du premier laps de temps, le contrôleur électronique pourra s'assurer en toute sécurité qu'aucun court-circuit n'affecte le condensateur 3, en utilisant une intensité réduite (par exemple 100 mA). Puis, au cours du second laps de temps, si aucun court-circuit n'est détecté, le calculateur pourra commander la pré-charge du condensateur 3 avec une intensité plus élevée (par exemple 5 A).

## Revendications

1. Dispositif de pré-charge (10) d'un réseau électrique (1), comprenant :
- une ligne électrique d'alimentation (L1) du réseau électrique de puissance (10), incluant un transistor principal (Q1),
- un module de commande (12) du transistor principal (Q1), qui est adapté à limiter l'intensité (i) du courant circulant dans la ligne électrique d'alimentation (L1), et
- un module d'alimentation (14) dudit module de commande (12), qui est connecté à la ligne électrique d'alimentation (L1), de part et d'autre du transistor principal (Q1).

2. Dispositif de pré-charge (10) selon la revendication précédente, comportant en outre un boîtier (11) et exactement deux bornes de connexion (15, 16) qui émergent dudit boîtier (11), les deux bornes de connexion (15, 16) étant connectées à la ligne électrique d'alimentation (L1), de part et d'autre du transistor principal (Q1).

3. Dispositif de pré-charge (10) selon l'une des revendications précédentes, dans lequel le module d'alimentation (14) est adapté à retarder l'activation du module de commande (12) par rapport au moment où une différence de potentiels apparaît aux bornes du transistor principal (Q1).

4. Dispositif de pré-charge (10) selon l'une des revendications 1 à 3, dans lequel le module de commande (12) comporte exactement un transistor (Q2) qui est connecté au transistor principal (Q1) et dans lequel le module d'alimentation (14) et le module de commande (12) sont conçus pour commander le transistor principal (Q1) en mode linéaire au cours de la pré-charge du réseau électrique de puissance (1).

5. Dispositif de pré-charge (10) selon la revendication précédente, dans lequel le module d'alimentation (14) est adapté à générer une impulsion de courant.

6. Dispositif de pré-charge (10) selon l'une des revendications 4 et 5, dans lequel le module de commande (12) est adapté à réguler l'intensité (i) du courant traversant le transistor principal (Q1) à une valeur prédéterminée, pendant une durée prédéterminée.

7. Dispositif de pré-charge (10) selon l'une des revendications 1 à 3, dans lequel le module de commande (12) comporte un circuit intégré (P1) qui est adapté à commander le transistor principal (Q1) en mode de modulation de largeur d'impulsion au cours de la pré-charge du réseau électrique de puissance (1).

8. Dispositif de pré-charge (10) selon la revendication précédente, dans lequel la ligne électrique d'alimentation (L1) inclut une bobine (B1).

9. Dispositif de pré-charge (10) selon l'une des revendications précédentes, dans lequel le module de commande (12) comporte un amplificateur opérationnel.

10. Dispositif de pré-charge (10) selon l'une des revendications 1 à 5, 7 et 8, dans lequel le module de commande (12) est adapté à moduler l'intensité (i) du courant au cours de la pré-charge du réseau électrique de puissance (1) à une première valeur au cours d'un premier laps de temps, puis à une seconde valeur au moins trois fois supérieure à la première valeur au cours d'un second laps de temps.

11. Dispositif de pré-charge (10) selon l'une des revendications précédentes, dans lequel le module de commande (12) comporte un circuit de modulation de largeur d'impulsion.

12. Réseau électrique de puissance (1) comportant :
- une batterie d'accumulateurs (2),
- un condensateur (3),
- deux lignes de connexion principales (4, 6), qui connectent les bornes de la batterie d'accumulateurs (2) aux bornes du condensateur (3) et dont l'une au moins comporte un relais principal (5, 7),
- un circuit de pré-charge (8) qui est branché en parallèle de l'une des deux lignes de connexion principales (4) et qui comprend un relais de pré-charge (9) et un dispositif de pré-charge (10) conforme à l'une des revendications précédentes.

## Patentansprüche

1. Vorrichtung zum Vorladen (10) eines elektrischen Stromnetzes (1), die Folgendes aufweist:
- eine elektrische Versorgungsleitung (L1) des Leistungsstromnetzes (10), die einen Haupttransistor (Q1) beinhaltet,
- ein Steuermodul (12) des Haupttransistors (Q1), das dazu geeignet ist, die Stärke (i) des in der elektrischen Versorgungsleitung (L1) fließenden Stroms zu begrenzen, und
- ein Versorgungsmodul (14) des Steuermoduls (12), das mit der elektrischen Versorgungsleitung (L1) auf beiden Seiten des Haupttransistors (Q1) verbunden ist.

2. Vorladevorrichtung (10) nach dem vorhergehenden Anspruch, die darüber hinaus ein Gehäuse (11) und genau zwei Verbindungsanschlüsse (15, 16) aufweist, die aus dem Gehäuse (11) herausragen, wobei die beiden Verbindungsanschlüsse (15, 16) mit der elektrischen Versorgungsleitung (L1) auf beiden Seiten des Haupttransistors (Q1) verbunden sind.

3. Vorladevorrichtung (10) nach einem der vorhergehenden Ansprüche, wobei das Versorgungsmodul (14) dazu geeignet ist, die Aktivierung des Steuermoduls (12) in Bezug auf den Zeitpunkt zu verzögern, an dem eine Potenzialdifferenz an den Anschlüssen des Haupttransistors (Q1) auftritt.

4. Vorladevorrichtung (10) nach einem der Ansprüche 1 bis 3, wobei das Steuermodul (12) genau einen Transistor (Q2) aufweist, der mit dem Haupttransistor (Q1) verbunden ist, und wobei das Versorgungsmodul (14) und das Steuermodul (12) dazu ausgelegt sind, den Haupttransistor (Q1) während des Vorladens des Leistungsstromnetzes (1) im Linearbetrieb anzusteuern.

5. Vorladevorrichtung (10) nach dem vorhergehenden Anspruch, wobei das Versorgungsmodul (14) dazu geeignet ist, einen Stromimpuls zu erzeugen.

6. Vorladevorrichtung (10) nach einem der Ansprüche 4 oder 5, wobei das Steuermodul (12) dazu geeignet ist, die Stärke (i) des Stroms durch den Haupttransistor (Q1) für eine vorbestimmte Zeitdauer auf einen vorbestimmten Wert zu regeln.

7. Vorladevorrichtung (10) nach einem der Ansprüche 1 bis 3, wobei das Steuermodul (12) einen integrierten Schaltkreis (P1) aufweist, der dazu geeignet ist, den Haupttransistor (Q1) während des Vorladens des Leistungsstromnetzes (1) im Pulsweitenmodulationsbetrieb zu steuern.

8. Vorladevorrichtung (10) nach dem vorhergehenden Anspruch, wobei die elektrische Versorgungsleitung (L1) eine Spule (B1) aufweist.

9. Vorladevorrichtung (10) nach einem der vorhergehenden Ansprüche, wobei das Steuermodul (12) einen Operationsverstärker aufweist.

10. Vorladevorrichtung (10) nach einem der Ansprüche 1 bis 5, 7 und 8, wobei das Steuermodul (12) dazu geeignet ist, die Stromstärke (i) während des Vorladens des Leistungsstromnetzes (1) auf einen ersten Wert während eines ersten Zeitabschnitts und dann auf einen zweiten Wert, der mindestens dreimal so hoch ist wie der erste Wert, während eines zweiten Zeitabschnitts zu modulieren.

11. Vorladevorrichtung (10) nach einem der vorhergehenden Ansprüche, wobei das Steuermodul (12) einen Schaltkreis für Pulsweitenmodulation aufweist.

12. Leistungsstromnetz (1), das Folgendes aufweist:
- eine Akkumulatorenbatterie (2),
- einen Kondensator (3),
- zwei Hauptverbindungsleitungen (4, 6), die die Anschlüsse der Akkumulatorenbatterie (2) mit den Anschlüssen des Kondensators (3) verbinden und von denen mindestens eine ein Hauptrelais (5, 7) enthält,
- einen Vorladeschaltkreis (8), der parallel zu einer der beiden Hauptverbindungsleitungen (4) geschaltet ist und ein Vorladerelais (9) und eine Vorladungsvorrichtung (10) gemäß einem der vorhergehenden Ansprüche aufweist.

## Claims

1. Pre-charging device (10) for pre-charging an electric grid (1), comprising:
- an electric power supply line (L1) for supplying the electric power grid (10) with power, including a main transistor (Q1),
- a control module (12) for controlling the main transistor (Q1), which is suitable for limiting the magnitude (i) of the current flowing through the electric power supply line (L1), and
- a power supply module (14) for supplying said control module (12) with power, which is connected to the electric power supply line (L1), on either side of the main transistor (Q1).

2. Pre-charging device (10) according to the preceding claim, further comprising a housing (11) and exactly two connection terminals (15, 16) which emerge from said housing (11), the two connection terminals (15, 16) being connected to the electric power supply line (L1), on either side of the main transistor (Q1).

3. Pre-charging device (10) according to either of the preceding claims, wherein the power supply module (14) is suitable for delaying the activation of the control module (12) with respect to the moment when a potential difference appears across the terminals of the main transistor (Q1).

4. Pre-charging device (10) according to one of Claims 1 to 3, wherein the control module (12) comprises exactly one transistor (Q2) which is connected to the main transistor (Q1) and wherein the power supply module (14) and the control module (12) are designed to control the main transistor (Q1) in linear mode during pre-charging of the electric power grid (1).

5. Pre-charging device (10) according to the preceding claim, wherein the power supply module (14) is suitable for generating a current pulse.

6. Pre-charging device (10) according to either of Claims 4 and 5, wherein the control module (12) is suitable for regulating the magnitude (i) of the current flowing through the main transistor (Q1) to a predetermined value, for a predetermined period.

7. Pre-charging device (10) according to one of Claims 1 to 3, wherein the control module (12) comprises an integrated circuit (P1) which is suitable for controlling the main transistor (Q1) in pulse-width modulation mode during pre-charging of the electric power grid (1).

8. Pre-charging device (10) according to the preceding claim, wherein the electric power supply line (L1) includes a coil (B1).

9. Pre-charging device (10) according to one of the preceding claims, wherein the control module (12) comprises an operational amplifier.

10. Pre-charging device (10) according to one of Claims 1 to 5, 7 and 8, wherein the control module (12) is suitable for modulating the magnitude (i) of the current during the pre-charging of the electric power grid (1) to a first value during a first time period, then to a second value at least three times greater than the first value during a second time period.

11. Pre-charging device (10) according to one of the preceding claims, wherein the control module (12) comprises a pulse-width modulation circuit.

12. Electric power grid (1) comprising:
- an accumulator battery (2),
- a capacitor (3),
- two main connection lines (4, 6), which connect the terminals of the accumulator battery (2) to the terminals of the capacitor (3) and at least one of which comprises a main relay (5, 7),
- a pre-charging circuit (8) which is connected in parallel with one of the two main connection lines (4) and which comprises a pre-charging relay (9) and a pre-charging device (10) according to one of the preceding claims.
